# EUROPÄISCHE PATENTANMELDUNG

(11) **EP 2 554 857 A1**
(43) Veröffentlichungstag der Anmeldung: **06.02.2013**
(21) Anmeldenummer: 12004088.6
(22) Anmeldetag: 25.05.2012
(51) Int. Cl.: F16B 41/00

(54) **Vorrichtung zur Halterung eines Gewindestifts**

(30) Priorität: 04.08.2011 DE 102011109451
(71) Anmelder: VERITAS AG, 63571 Gelnhausen (DE)
(72) Erfinder: Wilhelmi, Oliver, 63589 Linsengericht (DE)
(74) Vertreter: Grünecker, Kinkeldey, Stockmair & Schwanhäusser

(57) **Zusammenfassung**

Die vorliegende Erfindung betrifft eine Vorrichtung zur Halterung eines Gewindestifts. Die Vorrichtung weist hierzu eine Hülse auf, zur Aufnahme des Gewindestifts, wobei die Hülse in einem Bauteil positionierbar ist, um dort den Gewindestift zu halten. Eine innere Bohrung der Hülse, in der der Gewindestift einführbar ist, weist drei Vorsprünge auf, die gleichmäßig über einen Umfang der Bohrung angeordnet sind, wobei ein mittlerer Abstand der Vorsprünge zueinander kleiner als ein Durchmesser des Gewindestifts ist.

## Beschreibung

Die vorliegende Erfindung betrifft eine Vorrichtung zur Halterung eines Gewindestifts, insbesondere zur Sicherung einer nicht mit einem Gewinde in Eingriff stehenden Schraube nach dem Oberbegriff des Anspruchs 1.

Im Karosseriebau werden Bauteile mit Verbindungselementen zusammengefügt, die aus einem Gewindestift in Form einer Schraube und einem korrespondierenden Gewinde gebildet sind. Zur Vereinfachung eines Montageverfahrens werden die Schrauben mit einer Schraubensicherung in jeweils einem der Bauteile platziert. Mit der Verbindung der beiden Bauteile befinden sich damit die Schrauben in der jeweils notwendigen Position, aus der die Schrauben leicht in das korrespondierende Gewinde des gegenüberliegenden Bauteils eingeschraubt werden können.

Die Schraubensicherungen müssen dabei zwei Aufgaben erfüllen. Einerseits muss die Schraubensicherung in einem Bauteil sicher platzierbar sein und andererseits muss zur Erfüllung der zweiten Aufgabe die Schraubensicherung die Schraube sicher aufnehmen, damit diese in einer definierten Position gehalten werden kann.

Hierzu sind unterschiedliche Ansatzpunkte entwickelt worden, beispielsweise ist aus der EP 1592891 eine Vorrichtung zum Halten eines Bolzens in einer Bohrung bekannt, bei der eine Hülse in die Bohrung eingesetzt wird. Diese Hülse weist in einer innenliegenden Bohrung nach innen ragende Rippen auf, wobei die Rippen biegeelastisch ausgelegt sind und eine Haltekraft auf den Bolzen ausüben. Die Hülse selbst weist vorzugsweise dabei einen Durchmesser auf, der etwas größer als die der Bohrung ist, womit die Hülse sicher in der Bohrung verklemmt ist.

Eine ähnliche Schraubensicherung ist auch aus der US 6039525 bekannt, bei der eine hülsenförmige Sicherung eine Schraube gegen eine Scheibe sichert. Diese Kombination aus Schraube, Unterlegscheibe und Sicherungshülse wird in ein Bauteil eingefügt, wobei die Sicherungshülse in eine weitere Bohrung des Bauteils verklemmt wird.

Ebenso ist aus der US 5395194 eine Schraubensicherung bekannt, die ebenfalls in einer Bohrung eines ersten Bauteils verklemmt wird, das auf ein zweites Bauteil zu positionieren ist. In die Schraubensicherung ist eine Schraube einsetzbar, wobei ein Innendurchmesser der Schraubensicherung verkleinert gegenüber einem äußeren Durchmesser der Schraube ist. Dadurch ist die Schraube in der Schraubensicherung ebenfalls verklemmt.

Schließlich ist noch aus der US 6059503 eine Schraubensicherung bekannt, die in einen Flansch einklemmbar ist. Die Schraubensicherung sichert eine Schraube, die zwei Bauteile miteinander verbindet, wobei im Bereich einer Bohrung eines ersten Bauteils zusätzlich eine Abdichtung vorgesehen ist, die den Flansch umgibt. Mit Zuziehen der Schraube wird über einen Schraubenkopf Druck auf die Abdichtung ausgeübt, so dass diese dicht in einer entsprechenden Bohrung eine Abdichtfunktion übernimmt.

Auch wenn bei den vorgenannten Schraubensicherungen die Halterung der Schrauben im Vordergrund steht, so besteht doch ein gewisser Nachteil, dass die Schrauben nach wie vor beweglich sind. Es ist im Fall der US 6039525 eine Kippbewegung des dargestellten Bolzens möglich, was eine genaue Anpassung des Bauteils, in dem der Bolzen gesichert ist, mit einem weiteren Bauteil erschwert. Zusätzlich ist auch eine Axialbewegung möglich, wie dieses auch bei der Schraubensicherung der US 6059503 der Fall ist. Sofern eine genaue Positionierung der Schraube in einem Bauteil mit einer Schraubensicherung nicht möglich ist, wird, wie erwähnt, das Zusammensetzen zweier Bauteile erschwert. Insbesondere bei einer robotergefügten Montage kann dieses zu einer erheblichen Zeitverzögerung kommen, da händisch nachgearbeitet werden muss.

Es ist deshalb eine Aufgabe der vorliegenden Erfindung, die eingangs genannte Schraubensicherung weiter zu entwickeln und eine Schraubensicherung bereitzustellen, mit der Schrauben in einer definierten Lage positionierbar sind.

Eine Vorrichtung zur Lösung der Aufgabe weist die Merkmale des Anspruchs 1 auf. Eine solche Vorrichtung zur Halterung eines Gewindestifts, insbesondere zur Sicherung einer nicht mit einem Gewinde in Eingriff stehenden Schraube, weist eine Hülse mit einer Durchgangsöffnung zur Aufnahme des Gewindestifts auf, wobei zumindest drei vorzugsweise konvex ausgebildete Vorsprünge zum Halten des Gewindestifts in die Durchgangsöffnung reinragen, und wobei die Durchgangsöffnung wenigstens zwei axial hintereinander angeordnete Bereiche aufweist, die eine unterschiedliche Innenkontur aufweisen. Hierdurch kann insbesondere ein Haltebereich vorgesehen sein, in dem die Vorsprünge vorgesehen sind, der sich von einem Aufnahmebereich unterscheidet. Mit der erfinderischen Schraubensicherung kann der Gewindestift in einer definierten Lage gehalten werden.

Weiterhin kann in der Durchgangsöffnung ein erster Bereich gegenüber einem zweiten Bereich eine kleinere Querschnittsfläche aufweisen, wobei in dem ersten Bereich die Vorsprünge angeordnet sind. Der Aufnahmebereich, der im Wesentlichen im Querschnitt größer als der Haltebereich ausgebildet sein kann, erleichtert das Einführen des Gewindestifts in den Haltebereich. Somit wird der Gewindestift über den Aufnahmebereich in den Haltebereich eingeführt.

Nach einer Weiterbildung der Erfindung kann die Hülse wenigstens zum Teil eine im Wesentlichen kreiszylindrische Außenkontur aufweisen, wobei vorzugsweise die Außenkontur und die Innenkontur zumindest teilweise koaxial zueinander angeordnet sind. Zum besseren Einführen der Schraube in den Haltebereich ist ein oberer, erster Bereich in etwa kreisförmig ausgebildet, damit die Schraube leicht eingesetzt werden kann. In diesem Bereich ist auch eine äußere Kontur kreisförmig ausgebildet, da die Schraubensicherung in einer Bohrung in einem Bauteil angeordnet werden kann, so dass ein möglichst großflächiger Kontakt von Hülse und Bauteilbohrung hergestellt werden kann. Damit ist die Hülse besser gegen ein Herausfallen aus der Bohrung gesichert, da sie reibschlüssig in der Bohrung angeordnet ist.

Gemäß einer besonderen Ausführungsform können die Vorsprünge jeweils an einem Endabschnitt der Durchgangsöffnung und die im Wesentlichen runde Kontur an einem hierzu gegenüberliegend angeordneten Endabschnitt angeordnet sein.

Weiterhin ist vorteilhaft vorgesehen, dass die Vorsprünge wenigstens zum Teil trichterförmig ausgebildet sind und die Innenkontur sich insbesondere zu dem Endabschnitt verjüngt. Durch die Trichterform des Innenquerschnitts der Hülse im Bereich der Vorsprünge kann die Verbindung zwischen Gewindestift und der Schraubensicherung weiter erhöht werden. Das Herauslösen der Schraube aus der Sicherung wird damit zusätzlich erschwert, so dass auch eine axiale Bewegung der Schraube verhindert werden kann.

Nach einem weiteren Ausführungsbeispiel der Erfindung können in einem Übergangsbereich von runder Innenkontur zu den Vorsprüngen die Vorsprünge konisch ausgebildet sein. Hierdurch kann bei einem gegenüber einem Außendurchmesser der Schraube im Bereich der Vorsprünge verkleinertem Innendurchmesser die Schraube leichter in den Haltebereich eingeführt werden.

Weiterhin können nach einer besonderen Ausführungsform die Vorsprünge sich zu Dreiviertel, vorzugsweise zur Hälfte, besonders bevorzugt zu einem Drittel in die Durchgangsöffnung erstrecken. Hiermit ist gewährleistet, dass ein Aufnahmebereich in der Durchgangsöffnung vorgesehen ist.

Weiterhin kann die Vorrichtung, insbesondere die Hülse, eine größere Länge als Breite aufweisen, wodurch die Stabilität einer Sicherungsanordnung aus Schraubensicherung, Bauteil und Schraube gewährleistet ist. Bei einer größeren Länge als Breite kann die Schraubensicherung sich nicht leicht aus einer lotrechten Position herausbewegen, was für die Gebrauchstauglichkeit zuträglich ist.

Bevorzugt können die Vorsprünge elastisch verformbar sein, wobei sie insbesondere eine geringere Festigkeit gegenüber einem wesentlichen Teil der Hülse aufweisen. Ein Gewindegang der Schraube drückt sich in das Material der Vorsprünge, wodurch die Schraube reibschlüssig in der Hülse gesichert ist. Zum verhältnismäßig leichten Eindrehen der Schraube in die Hülse ist eine geringere Festigkeit der Vorsprünge notwendig. Damit kann die Hülse eine hohe Festigkeit aufweisen, um in der Bohrung reibschlüssig verklemmt zu werden, während andere Bereiche eine geringere Fertigkeit aufweisen.

Gemäß einer anderen Weiterbildung der Erfindung kann die Hülse im Bereich des kreiszylindrischen Endabschnitts einen umlaufenden Wulst, insbesondere einen Dichtungswulst, aufweisen zur Dichtung eines Spalts zwischen dem Gewindestift und einem umliegenden Bauteil. Der Dichtungswulst dient zusätzlich als Abdichtung der Hülse gegenüber dem Bauteil, in dem die Hülse eingesetzt ist. Bei einem Gewindestift mit Kopf wird bei fest eingeschraubter Schraube axialer Druck auf die Hülse und/oder das einfassende Bauteil ausgeübt. Mit dem Dichtungswulst kann insbesondere im Bereich eines Übergangs von Schraubenkopf, oberer Kante der Hülse und dem einfassenden Bauteil eine zufriedenstellende Abdichtung hergestellt werden, mit der der Verbindungsbereich des Bauteils gegenüber Umwelteinflüssen abdichtbar ist. Mit dem zusätzlichen Dichtungswulst kann somit auf zusätzliche Dichtmittel in diesem Bereich verzichtet werden. Zusätzlich bildet die Verdickung eine Art Flansch, der über die Umfangsfläche der Hülse hervorsteht. Damit erhält die Hülse gleichzeitig auch eine gewisse Begrenzung zur Bestimmung der Lage in einem Bauteil, in das die Hülse eingesetzt wird. Sofern die Bohrung, in die die Hülse eingesetzt wird, im Wesentlichen im Umfang der Hülse entspricht, begrenzt der Flansch bzw. die Verdickung die Einsetztiefe der Hülse.

Besonders bevorzugt kann die Vorrichtung aus Kunststoff gefertigt sein, wobei insbesondere die Hülse aus einem anderen Material als der Wulst und/oder die Vorsprünge gefertigt ist. Der Hülsenkörper kann nach der Zwei-Komponenten-Bauweise hergestellt sein, wobei die Vorsprünge und/oder der Dichtungswulst in einem zweiten Verfahrensschritt auf die Hülse aufgebracht werden.

Weiterhin wird die Aufgabe durch eine Sicherungsanordnung mit den Merkmalen des Anspruchs 12 gelöst. Danach kann die Sicherungsanordnung einen nicht mit einem Gewinde in Eingriff stehenden Gewindestift, insbesondere eine Schraube, und eine Hülse aufweisen, wobei die Hülse in einem Bauteil angeordnet und die Schraube in einer Durchgangsöffnung der Hülse angeordnet ist, und wobei die Durchgangsöffnung wenigstens zwei axial zueinander angeordnete Bereiche aufweisen kann, die eine unterschiedliche Innenkontur aufweisen, wobei wenigstens ein innerer Durchmesser der Hülse verkleinert gegenüber einem Kerndurchmesser des Gewindestifts ist.

Weitere Ausführungsbeispiele sind den Unteransprüchen zu entnehmen.

Nachfolgend wird anhand der Zeichnung ein bevorzugtes Ausführungsbeispiel näher erläutert. In dieser zeigen:
- Fig. 1: eine Seitenansicht der Schraubensicherung,
- Fig. 2: eine Draufsicht auf die Schraubensicherung nach Fig. 1,
- Fig. 3: eine perspektivische Seitenansicht der Schraubensicherung nach Fig. 1, und
- Fig. 4: eine Schnittdarstellung durch ein Bauteil mit Schraube und Schraubensicherung.

Im Allgemeinen dient das in den Figuren dargestellte Bauteil der Halterung oder Sicherung eines Gewindestifts in einem Bauteil, bevor das Bauteil mit einem weiteren korrespondierenden Bauteil mittels des Gewindestifts verbunden wird.

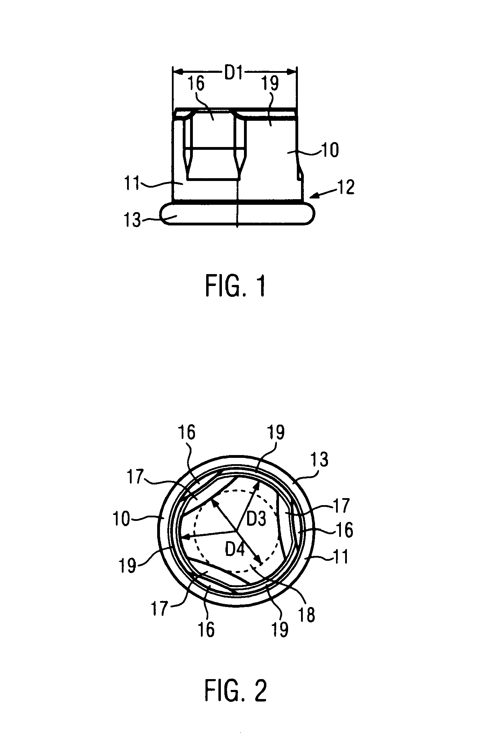

Eine Schraubensicherung 10, wie sie in den Fig. 1 bis 4 dargestellt ist, weist eine im Wesentlichen zylindrische Hülse 11 auf. An einem Ende 12 der Hülse 11 ist eine Verdickung 13 angeordnet, die die Hülse 11 umfangsseitig umschließt. In der Fig. 1 ist die Verdickung 13 in einem unteren Bereich der Hülse 11 angeordnet.

Im Bereich oberhalb der Verdickung 13 ist die Hülse 11 im Wesentlichen kreisförmig ausgebildet, wobei ein äußerer Durchmesser D1 in diesem Bereich der Hülse 11 in etwa einem inneren Durchmesser D2 einer Bohrung 14 eines Bauteils 15 entspricht. Der Durchmesser D1 der Hülse 11 ist derart gewählt, dass die Hülse 11 in dem Bauteil 15 reibschlüssig angeordnet werden kann. Das bedeutet, dass der Durchmesser D1 der Hülse 11 ein wenig größer als der Durchmesser D2 der Bohrung 14 des Bauteils 15 ist.

In einem in Fig. 1 gezeigten oberen Bereich weist die Hülse 11 Vertiefungen 16 auf. Diese Vertiefungen 16 korrespondieren mit Vorsprüngen 17 in einer innen liegenden Durchgangsöffnung 18 der Hülse 11. Die Vorsprünge 17 wechseln sich mit Bereichen 19 der Hülse 11 ab, die im Umfang dem oberhalb der Verdickung 13 angeordneten Bereich entsprechen. Somit weist die Schraubensicherung 10 auch in dem Bereich 19 der Vertiefungen 16 einen Umfang auf, der wenig größer als der Durchmesser D2 der Durchgangsöffnung 14 des Bauteils 15 ist.

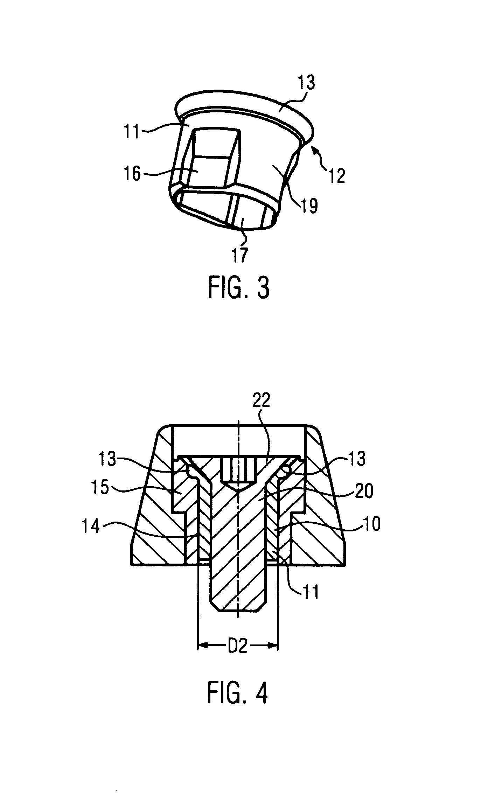

Die innen liegende Durchgangsöffnung 18 ist zur Aufnahme eines Gewindestifts 20 bestimmt, der in der Fig. 4 als Schraube dargestellt ist. Die Durchgangsöffnung 18 weist einen inneren Durchmesser D3 auf. In die Durchgangsöffnung 18 ragen die Vorsprünge 17 rein, die der Sicherung der Schraube 20 dienen. Die Vorsprünge 17 erstrecken sich wenigstens teilweise in axialer Richtung der Durchgangsöffnung 18 bzw. der Hülse 11, vorzugsweise entsprechend der axialen Erstreckung der Vertiefungen 16. In einem alternativen nicht dargestellten Ausführungsbeispiel der Erfindung können die Vertiefungen sich auch über die gesamte Länge der Durchgangsöffnung erstrecken.

Die Vorsprünge 17 bilden innerhalb der Durchgangsöffnung 18 einen Durchmesser D4, der geringer ist als der Durchmesser D3 der Durchgangsöffnung 18. Zudem ist der Durchmesser D4 verkleinert gegenüber einem Kerndurchmesser der Schraube 20, womit auch ein äußerer Durchmesser der Schraube 20 größer als der Durchmesser D4 ist. Im vorliegenden Ausführungsbeispiel entspricht der Durchmesser D3 der Durchgangsöffnung 18 in etwa dem äußeren Durchmesser der Schraube 20, wie in der Fig. 4 dargestellt ist. Im eingeschraubten Zustand der Schraube 20 sind die Vertiefungen 16 zumindest zum Teil aus einer Ruheposition herausgedrückt. Die Vorsprünge 17 sind gleichmäßig über einen Umfang der Durchgangsöffnung 18 verteilt angeordnet.

Die Vorsprünge 17 sind elastisch verformbar, wodurch ein Gewinde der Schraube 20 entweder sich leicht in die Vorsprünge 17 eindrückt oder die Vorsprünge 17 entsprechend des äußeren Durchmessers der Schraube 20 zurückgedrückt werden. Durch die Bemessung des Durchmessers D4 im Bereich der Vorsprünge 17 wird eine hohe Reibkraft zwischen der Schraube 20 und der Hülse 11 erzeugt, die eine sichere Positionierung der Schaube 20 in der Schraubensicherung 10 gewährleistet.

Die Vorsprünge 17 ragen sekantial in die Durchgangsöffnung 18 hinein, wobei eine zu einer Längsmittelachse der Durchgangsöffnung 18 gerichtete Oberseite 21 der Vorsprünge 17 gekrümmt ist. Die Krümmung der Oberseite 21 ist konvex gegenüber der Durchgangsöffnung 18. In dem gezeigten Ausführungsbeispiel ragen insgesamt drei Vorsprünge 17 in die Durchgangsöffnung 18 hinein. Damit weist die Hülse 11 drei Bereiche 19 auf, die gegenüber den Vorsprüngen 17 zurückgesetzt sind und sich mit diesen abwechseln.

Die Verdickung 13 ist als eine Art Flansch ausgebildet und umschließt die Hülse 11 umfangsseitig. Nach einer Ausführungsform schließt ein Rand der Verdickung 13 im Wesentlichen mit einem Rand der Hülse 11 ab, wobei auch andere Konstruktionen vorgesehen sind. So kann beispielsweise die Verdickung 13 auf den Rand aufgesetzt sein, bei gleichzeitigem Vorstehen über den Umfang der Hülse 11. Hierbei kann auch eine Stufe zwischen Hülsenrand und der Verdickung 13 vorgesehen sein.

Die Verdickung 13 ist ein Dichtungswulst und ist aus einem plastisch verformbaren Material gebildet, das durch die Schraube 20, insbesondere durch einen Schraubenkopf 22, komprimiert wird, wenn die Schraube 20 in ein mit einem ersten Bauteil 15 korrespondierendem zweiten Bauteil 23 eingedreht ist. Durch das Einschrauben der Schraube 20 bewegt sich die Schraube 20 in axialer Richtung, wodurch ein Spalt zwischen dem Bauteil 15, der Schraubensicherung 10 und der Schraube 20 bzw. dem Schraubenkopf 22 durch die Verdickung geschlossen wird. Der Dichtungswulst 13 schließt durch sein plastisch verformbares Material zuverlässig den in diesem Bereich auftretenden Spalt. Eine Abdichtung des Bauteils 15 im Bereich der Bohrung 14 ist somit leicht möglich und auf zusätzliche Dichtungseinrichtungen kann verzichtet werden.

Der Dichtungswulst 13 weist hierfür eine geringere Festigkeit als die der Hülse 11 auf. Die Schraubensicherung 10 besteht deshalb aus zwei Komponenten, nämlich der Hülse 11 oder dem Dichtungswulst 13. Bei der Fertigung der Schraubensicherung 10 kann der Dichtungswulst 13 leicht auf die Hülse 11 aufgesetzt und mit dieser dauerhaft verbunden werden. Einstückige Hülsen 11 sind ebenfalls vorgesehen.

Ebenfalls können die Vorsprünge 17 aus einem weicheren Material als die Hülse 11 hergestellt sein. Die Hülse ist bevorzugt aus einem Kunststoff gefertigt, der eine Festigkeit aufweist, die einen möglichst hohen reibschlüssigen Sitz der Hülse 11 in einem Bauteil gewährleistet. Zum leichteren Einsetzen der Schraube 20 in die Hülse 11 können die Vertiefungen deshalb ebenfalls aus einem Material gefertigt sein, das eine geringere Festigkeit gegenüber der Hülse 11 aufweist. Alternativ sind die Vorsprünge 17 aus dem gleichen Material wie das der Hülse 11 gefertigt.

Das Gewinde des Gewindestifts bzw. der Schraube 20 schneidet beim Einsetzen in das Material der Schraubensicherung 10 ein, womit die Schraube 20 sowohl mittels einer Presspassung als auch formschlüssig in der Hülse 11 gesichert ist. Damit kann die Schraube 20 einerseits nicht verloren gehen und andererseits auch nicht in axialer Richtung verschoben oder seitlich ausgelenkt werden.

Bevorzugt wird die erfinderische Schraubensicherung 10 zur Befestigung eines Anschlagspuffers verwendet.

Im Gegensatz zum Stand der Technik, aus dem sternförmige Schraubensicherungen 10 bekannt sind, kann mit der kreisförmigen Kontur eine gleichmäßige Anlage der Hülse 11 in einer entsprechenden Bohrung 14 erzielt werden. Die dadurch erhöhten Reibkräfte zwischen Hülse 11 und einer Bohrwandung können somit erhöht und der Sitz der Schraubensicherung 10 verbessert werden.

Die Verdickung bzw. der Dichtungswulst 13 kann eine geringere Festigkeit gegenüber einem wesentlichen Teil der Hülse 11 aufweisen. Zur Sicherung der Schraube 20 in der Bohrung 14 weist die Hülse 11 eine relativ hohe Festigkeit auf, damit diese nicht verrutscht. Im Dichtungsbereich ist es indes notwenig, eine geringere Festigkeit vorzusehen, damit sich das Material leichter beim Festziehen der Schraube 20 verformen kann.

Die in die Durchgangsöffnung einragenden Vorsprünge 17 können zusammen mit erweiterten Bereichen, die in einer Ebene zu der kreiszylindrischen inneren Umfangsfläche des Aufnahmebereichs liegen, einen trilobularen Bereich innerhalb der Durchgangsöffnung bilden. Durch die Aufteilung der innenliegenden Durchgangsöffnung in drei Bereiche kann eine darin befindliche schraube 20 besonders gut gegen Verrutschen gesichert werden. Insbesondere ist mit einer trilobularen Geometrie eine Art selbsthemmende Sicherung der Schraube 20 in der Hülse 11 möglich.

Die Fläche zwischen den Vorsprüngen 17 kann gegenüber einem äußeren Durchmesser des Gewindestifts 20 verkleinert sein. Somit liegt der Gewindestift nicht vollflächig an einer Bohrwandung der Hülse 11 an. Eine leichtere Montage bzw. Bestückung der Schraubensicherung 10 mit einer Schraube 20 ist hierdurch möglich. Mit der trichterförmigen Kontur der Durchgangsöffnung 18 kann der Gewindestift 20 bevorzugt punktuell an den Vorsprüngen 17 anliegen, wobei mit weiterem Einschieben des Gewindestifts 20 in die Hülse die Anlagefläche von Gewindestift 20 und Vorsprung 17 sukzessive vergrößert wird.

Hierzu ist nach einer bevorzugten Ausführungsform der Erfindung die Durchgangsöffnung 18 zumindest abschnittsweise, insbesondere im Bereich der Vorsprünge 17, verkleinert, gegenüber einem kleinsten Durchmesser des Gewindestifts 20. Der kleinste Durchmesser des Gewindestifts 20 ist hierbei ein Kerndurchmesser, wodurch besonders hohe Anziehdrehmomente erzielen lassen, welches wiederum die Sicherung der Schraube 20 erhöht.

## Patentansprüche

1. Vorrichtung zur Halterung eines Gewindestifts, insbesondere zur Sicherung einer nicht mit einem Gewinde in Eingriff stehenden Schraube, aufweisend eine Hülse mit einer Durchgangsöffnung zur Aufnahme des Gewindestifts, wobei zumindest drei vorzugsweise konvex ausgebildete Vorsprünge zum Halten des Gewindestifts in die Durchgangsöffnung einragen, **dadurch gekennzeichnet, dass** die Durchgangsöffnung wenigstens zwei axial hintereinander angeordnete Bereiche aufweist, die eine unterschiedliche Innenkontur aufweisen.

2. Vorrichtung nach Anspruch 1, **dadurch gekennzeichnet, dass** in der Durchgangsöffnung ein erster Bereich gegenüber einem zweiten Bereich eine kleinere Querschnittsfläche aufweist und in dem ersten Bereich die Vorsprünge angeordnet sind.

3. Vorrichtung nach Anspruch 1 oder 2, **dadurch gekennzeichnet, dass** die Hülse wenigstens zum Teil eine im Wesentlichen kreiszylindrische Außenkontur aufweist, wobei vorzugsweise die Außenkontur und die Innenkontur zumindest teilweise koaxial zu einander angeordnet sind.

4. Vorrichtung nach wenigstens einem der Ansprüche 1 bis 3, **dadurch gekennzeichnet, dass** die Vorsprünge jeweils an einem Endabschnitt der Durchgangsöffnung und die im Wesentlichen runde Kontur an einem hierzu gegenüberliegend angeordneten Endabschnitt angeordnet sind.

5. Vorrichtung nach wenigstens einem der Ansprüche 1 bis 4, **dadurch gekennzeichnet, dass** die Vorsprünge wenigstens zum Teil trichterförmig ausgebildet sind und die Innenkontur sich insbesondere zu dem Endabschnitt verjüngt.

6. Vorrichtung nach wenigstens einem der Ansprüche 1 bis 5, **dadurch gekennzeichnet, dass** in einem Übergangsbereich von runder Innenkontur zu den Vorsprüngen, die Vorsprünge konisch ausgebildet sind.

7. Vorrichtung nach wenigstens einem der Ansprüche 1 bis 6, **dadurch gekennzeichnet, dass** die Vorsprünge sich zu Dreiviertel, vorzugsweise zur Hälfte, besonders bevorzugt zu einem Drittel in die Durchgangsöffnung erstrecken.

8. Vorrichtung nach wenigstens einem der Ansprüche 1 bis 7, **dadurch gekennzeichnet, dass** die Vorrichtung, insbesondere die Hülse, eine größere Länge als Breite aufweist.

9. Vorrichtung nach wenigstens einem der Ansprüche 1 bis 8, **dadurch gekennzeichnet, dass** die Vorsprünge elastisch verformbar sind, wobei sie insbesondere eine geringere Festigkeit gegenüber einem wesentlichen Teil der Hülse aufweisen.

10. Vorrichtung nach wenigstens einem der Ansprüche 1 bis 9, **dadurch gekennzeichnet, dass** die Hülse im Bereich des kreiszylindrischen Endabschnitts einen umlaufenden Wulst, insbesondere einen Dichtungswulst, aufweist zur Dichtung eines Spalts zwischen dem Gewindestift und einem umliegenden Bauteil.

11. Vorrichtung nach wenigstens einem der Ansprüche 1 bis 10, **dadurch gekennzeichnet, dass** die Vorrichtung aus Kunststoff gefertigt ist, wobei insbesondere die Hülse aus einem anderen Material als der Wulst und/oder die Vorsprünge gefertigt ist.

12. Sicherungsanordnung aufweisend einen nicht mit einem Gewinde in Eingriff stehenden Gewindestift, insbesondere eine Schraube, und eine Hülse, wobei die Hülse in einem Bauteil angeordnet und die Schraube in einer Durchgangsöffnung der Hülse angeordnet ist, **dadurch gekennzeichnet, dass** die Durchgangsöffnung wenigstens zwei axial zueinander angeordnete Bereiche aufweist, die eine unterschiedliche Innenkontur aufweisen, wobei wenigstens ein innerer Durchmesser der Hülse verkleinert gegenüber einem Kerndurchmesser des Gewindestifts ist.
